# EUROPEAN PATENT APPLICATION

(11) **EP 3 656 502 A1**
(43) Date of publication of application: **27.05.2020**
(21) Application number: 19205982.2
(22) Date of filing: 29.10.2019
(51) Int. Cl.: B24B 5/22, B24B 5/44, B24B 5/18, B24B 5/36, B24B 9/04, B24B 29/02, B24B 29/00, B24B 41/06

(54) **WHEEL DEBURRING MACHINE**

(30) Priority: 12.11.2018 CN 201811338341
(71) Applicant: Citic Dicastal Co., Ltd., 066011 Quinhuangdao, Heibei (CN)
(72) Inventor: ZHENG, Yao, Qinhuangdao, Hebei 066011 (CN); GUO, Jiandong, Qinhuangdao, Hebei 066011 (CN); YANG, Lei, Qinhuangdao, Hebei 066011 (CN); WANG, Xuesong, Qinhuangdao, Hebei 066011 (CN); HUANG, Xiaoguang, Qinhuangdao, Hebei 066011 (CN); LIU, Weidong, Qinhuangdao, Hebei 066011 (CN); ZHU, Zhihua, Qinhuangdao, Hebei 066011 (CN)
(74) Representative: Gerauer, Marc Philippé

(57) **Abstract**

The present invention aims at providing a wheel deburring machine. The wheel deburring machine is capable of meeting the demand for mixed-line high-precision clamping in a wheel burr brushing process when being used and is ideal in effect, high in efficiency, safe and reliable in working and high in automation degree so as to be particularly suitable for mass production on a production line.

## Description

### Field

The present invention relates to a wheel deburring device and specifically relates to a wheel deburring machine.

### Background

As the labor cost becomes higher and higher, it is required that the automation degree of a production process is higher and higher, and a process for machining a wheel by using a robot is more and more matured in the automobile wheel production industry. In order to meet the demands for brushing burrs on wheels of different sizes, a problem that automobile wheel production enterprises have to face is to realize mixed-line burr brushing of the wheels and high location precision.

### Summary

The present invention aims at providing a wheel deburring machine.

In order to achieve the aim, the technical scheme of the present invention is that: a wheel deburring machine is composed of a rack, lower flanges, guide posts, thrust cylinders, guide sleeves, thrust shafts, sleeves, a movable plate, upper flanges, a dust guard plate, air cylinder housings, pin shafts A, spacer rings A, air cylinders, connectors, pin shafts B, circlips, a brush, a supporting tool, pressing blocks, pin shafts C, spacer rings B, a coupling and a motor; the dust guard plate is welded on the rack; the lower flanges are fixedly arranged on the rack by bolts, and the upper flanges are fixedly arranged on the dust guard plate by bolts; the guide posts are fixedly arranged on the lower flanges and the upper flanges; the guide sleeves are fixedly arranged on the movable plate by the guide posts; the thrust cylinders are fixedly arranged on the rack by bolts; the thrust shafts are in threaded connection with the thrust cylinders and are fixedly arranged on the sleeves; the air cylinder housings are fixedly arranged on the rack by bolts; the air cylinders are fixedly arranged on the air cylinder housings by the pin shafts A and the spacer rings A; the air cylinders and the connectors are connected together by the pin shafts B and the circlips; the pressing blocks are capable of rotating by being connected with the pin shafts B, the pin shafts C and the spacer rings B; the brush is fixedly arranged on the supporting tool by a bolt; the supporting tool is connected with the motor by the coupling; the motor is fixed to the movable plate by bolts; the air cylinders push the connectors to do planar motion by being connected with the pin shafts A and the pin shafts B, the pressing blocks connected with the pin shafts B do circumferential motion by taking the pin shafts C as centers, and finally, the synchronous enclasping and centering functions of the wheel are achieved; air cylinder rods of the thrust cylinders push the movable plate to do linear motion to push the motor, so that the up-down motion of the brush is realized; and an output shaft of the motor makes the supporting tool do circumferential motion by virtue of the coupling, the supporting tool is connected with the brush by a bolt, and finally, the function that the brush circumferentially rotates to brush the wheel is achieved.

During actual use, the wheel is placed on a floor of the rack by a manipulator, compressed air is introduced to the air cylinders, and a wheel lip is pressed by the pressing blocks so that the centering and location of the wheel are realized, then, the movable plate is upwards pushed by the thrust cylinders by virtue of the thrust shafts, next, the motor drives the brush to do circumferential rotation motion by virtue of the coupling and the supporting tool, and thus, a wheel burr brushing function is achieved.

The wheel deburring machine is capable of meeting the demand for mixed-line high-precision clamping in a wheel burr brushing process when being used and is ideal in effect, high in efficiency, safe and reliable in working and high in automation degree so as to be particularly suitable for mass production on a production line.

### Brief Description of the Drawings

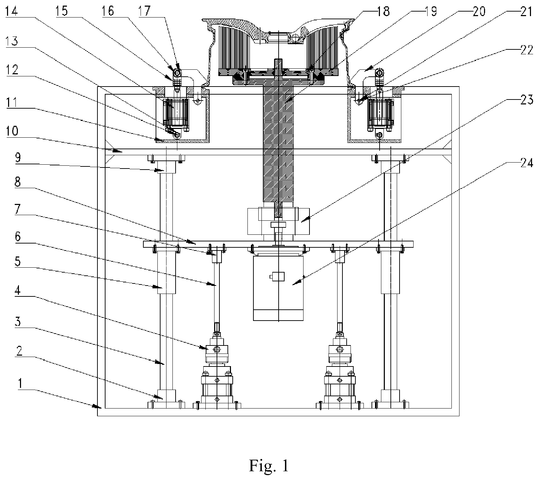

- Fig. 1: is a structural schematic diagram of the present invention.

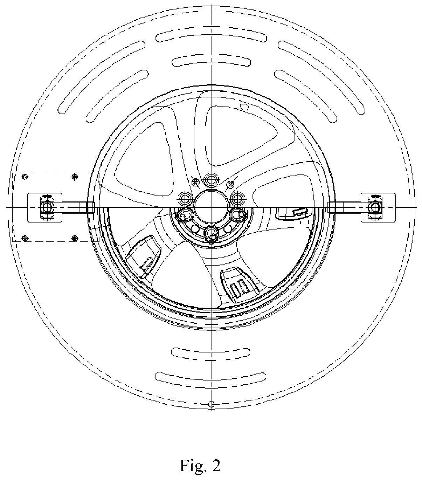

- Fig. 2: is a bottom view.

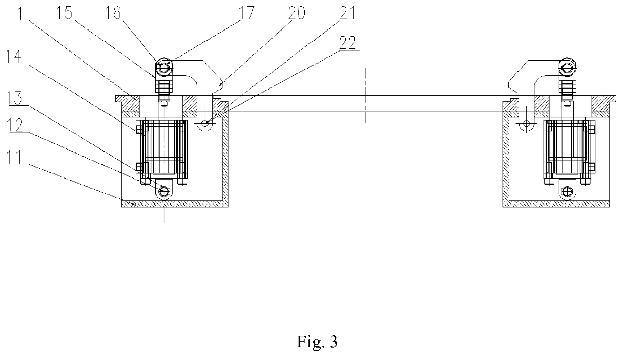

- Fig. 3: is a schematic diagram of a fixture.

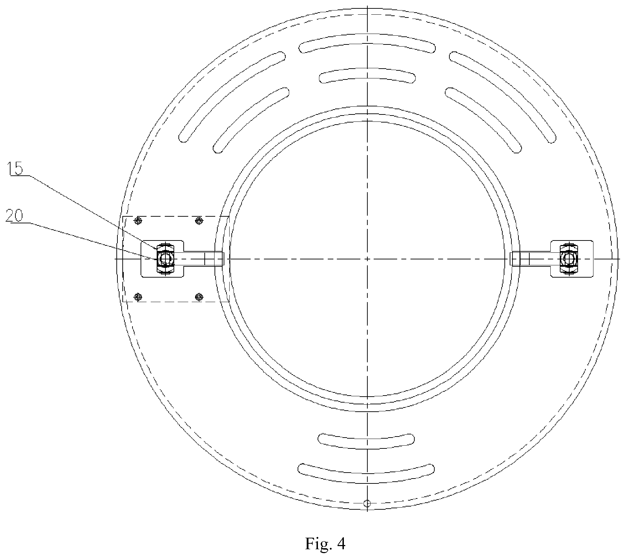

- Fig. 4: is a top view of the fixture.

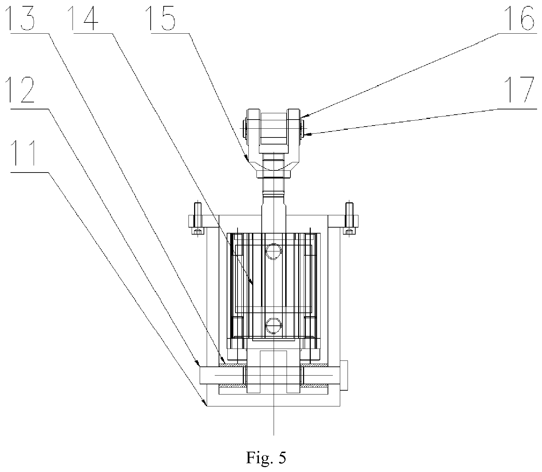

- Fig. 5: is a schematic diagram of a pressing mechanism.

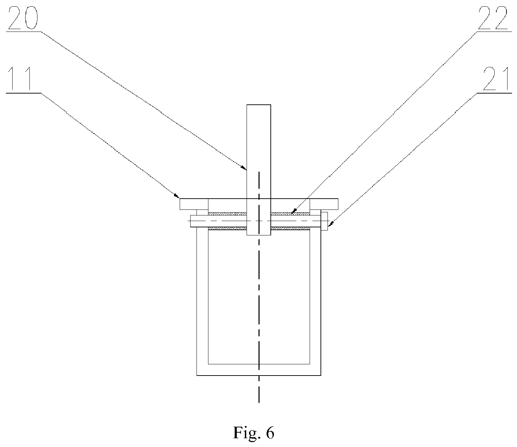

- Fig. 6: is a side view of the pressing mechanism.

### Detailed Description of the Embodiments

The detail and working condition of a specific device provided by the present invention are described in detail below in combination with accompanying drawings.

A wheel deburring machine is composed of a rack 1, lower flanges 2, guide posts 3, thrust cylinders 4, guide sleeves 5, thrust shafts 6, sleeves 7, a movable plate 8, upper flanges 9, a dust guard plate 10, air cylinder housings 11, pin shafts A 12, spacer rings A 13, air cylinders 14, connectors 15, pin shafts B 16, circlips 17, a brush 18, a supporting tool 19, pressing blocks 20, pin shafts C 21, spacer rings B 22, a coupling 23 and a motor 24; the dust guard plate 10 is welded on the rack 1; the lower flanges 2 are fixedly arranged on the rack 1 by bolts, and the upper flanges 9 are fixedly arranged on the dust guard plate 10 by bolts; the guide posts 3 are fixedly arranged on the lower flanges 2 and the upper flanges 9; the guide sleeves 5 are fixedly arranged on the movable plate 8 by the guide posts 3; the thrust cylinders 4 are fixedly arranged on the rack 1 by bolts; the thrust shafts 6 are in threaded connection with the thrust cylinders 4 and are fixedly arranged on the sleeves 7; the air cylinder housings 11 are fixedly arranged on the rack 1 by bolts; the air cylinders 14 are fixedly arranged on the air cylinder housings 11 by the pin shafts A 12 and the spacer rings A 13; the air cylinders 14 and the connectors 15 are connected together by the pin shafts B16 and the circlips 17; the pressing blocks 20 are capable of rotating by being connected with the pin shafts B 16, the pin shafts C 21 and the spacer rings B 22; the brush 18 is fixedly arranged on the supporting tool 19 by a bolt; the supporting tool 19 is connected with the motor 24 by the coupling 23; the motor 24 is fixed to the movable plate 8 by bolts; the air cylinders 14 push the connectors 15 to do planar motion by being connected with the pin shafts A 12 and the pin shafts B 16, the pressing blocks 20 connected with the pin shafts B 16 do circumferential motion by taking the pin shafts C 21 as centers, and finally, the synchronous enclasping and centering functions of the wheel are achieved; air cylinder rods of the thrust cylinders 4 push the movable plate 8 to do linear motion to push the motor 24, so that the up-down motion of the brush is realized; and an output shaft of the motor 24 makes the supporting tool 19 do circumferential motion by virtue of the coupling 23, the supporting tool 19 is connected with the brush 18 by a bolt, and finally, the function that the brush circumferentially rotates to brush the wheel is achieved.

During actual use, the wheel is placed on a floor of the rack 1 by a manipulator, compressed air is introduced to the air cylinders 14, and a wheel lip is pressed by the pressing blocks 20 so that the centering and location of the wheel are realized, then, the movable plate 8 is upwards pushed by the thrust cylinders 4 by virtue of the thrust shafts 6, next, the motor 24 drives the brush 18 to do circumferential rotation motion by virtue of the coupling 23 and the supporting tool 19, and thus, a wheel burr brushing function is achieved.

## Claims

1. A wheel deburring machine is composed of a rack, lower flanges, guide posts, thrust cylinders, guide sleeves, thrust shafts, sleeves, a movable plate, upper flanges, a dust guard plate, air cylinder housings, pin shafts A, spacer rings A, air cylinders, connectors, pin shafts B, circlips, a brush, a supporting tool, pressing blocks, pin shafts C, spacer rings B, a coupling and a motor, wherein the dust guard plate is welded on the rack; the lower flanges are fixedly arranged on the rack by bolts, and the upper flanges are fixedly arranged on the dust guard plate by bolts; the guide posts are fixedly arranged on the lower flanges and the upper flanges; the guide sleeves are fixedly arranged on the movable plate by the guide posts; the thrust cylinders are fixedly arranged on the rack by bolts; the thrust shafts are in threaded connection with the thrust cylinders and are fixedly arranged on the sleeves; the air cylinder housings are fixedly arranged on the rack by bolts; the air cylinders are fixedly arranged on the air cylinder housings by the pin shafts A and the spacer rings A; the air cylinders and the connectors are connected together by the pin shafts B and the circlips; the pressing blocks are capable of rotating by being connected with the pin shafts B, the pin shafts C and the spacer rings B; the brush is fixedly arranged on the supporting tool by a bolt; the supporting tool is connected with the motor by the coupling; the motor is fixed to the movable plate by bolts.

2. A wheel deburring machine according to claim 1, wherein the air cylinders push the connectors to do planar motion by being connected with the pin shafts A and the pin shafts B, the pressing blocks connected with the pin shafts B do circumferential motion by taking the pin shafts C as centers.

3. A wheel deburring machine according to claim 1, wherein air cylinder rods of the thrust cylinders push the movable plate to do linear motion to push the motor, so that the up-down motion of the brush is realized.

4. A wheel deburring machine according to claim 1, wherein an output shaft of the motor makes the supporting tool do circumferential motion by virtue of the coupling, the supporting tool is connected with the brush by a bolt.
